# FASCICULE DE BREVET EUROPEEN

(11) **EP 1 209 371 B1**
(45) Date de publication et mention de la délivrance du brevet: **17.08.2005**
(21) Numéro de dépôt: 01402973.0
(22) Date de dépôt: 21.11.2001
(51) Int. Cl.: F16C 1/26

(54) **Articulation pour commande à billes**
Gelenk für eine Kugel-Rampen-Betätigungseinrichtung
Pivot for a ball ramp actuator

(30) Priorité: 24.11.2000 FR 0015180
(43) Date de publication de la demande: 29.05.2002
(73) Titulaire: Constructions Brevetées d' Alfortville - CBA, 94140 Alfortville (FR)
(72) Inventeur: Agostini, Jacques, 91230 Montgeron (FR)
(74) Mandataire: Busnel, Jean-Benoît

(56) Documents cités:
- EP-A- 0 146 872
- EP-A- 0 164 486
- EP-A- 0 397 008
- EP-A- 1 043 508
- DE-A- 4 233 902
- FR-A- 1 206 922
- US-A- 2 531 892
- US-A- 2 730 134
- US-A- 3 490 798

## Description

La présente invention concerne une articulation pour une traversée de paroi par une commande à billes.

Les commandes à billes comprennent notamment une lame mobile longitudinalement au contact de billes entre deux rails latéraux fixés à l'intérieur d'une gaine métallique, voir par exemple le document EP-A-0 397 008.

Ses rayons de courbure tridimensionnels dérivent de la flexion et de la torsion de l'ensemble de ses composants.

Toutefois, pour les traversées de paroi, la commande est raccordée de part et d'autre de la paroi à des embouts, tandis que sa structure est réduite, sur le court tronçon de traversée, à la lame et à un tube externe de guidage.

La liberté de débattement du tube de guidage est assurée au moyen d'une rotule solidaire dudit tube et logée dans une embase permettant la fixation sur la paroi autour de l'orifice de traversée.

Cependant, la pose de cette embase nécessite le percement de trous dans la paroi à proximité de l'orifice, ce qui fragilise la paroi et qui est donc incompatible avec les exigences de certains cahiers des charges en particulier dans le domaine aéronautique.

En outre, les câbles de commande traditionnels sont équipés d'une rotule prolongée vers l'avant par un tronçon de tube de guidage. Mais la structure de cette rotule ne permet pas d'y adjoindre un tronçon arrière de tube qui est absolument nécessaire pour une commande à billes afin de garantir l'alignement axial de la lame dans le tube de part et d'autre de la paroi.

Cette rotule n'est donc pas adaptée à des commandes à billes.

Au surplus, le remplacement en lieu et place d'un câble de commande traditionnel par une commande à billes s'avère-t-il impossible en présence d'une traversée de paroi du fait que la lame n'a pas à elle seule de flexibilité dans tous les plans, ni surtout dans son propre plan à la différence d'un câble.

La présente invention a pour but de résoudre les problèmes techniques présentés ci-dessus.

Ce but est atteint, selon l'invention, au moyen d'une articulation, caractérisée en ce qu'elle comprend :
- un écrou pourvu d'une cavité axiale à parois sphériques débouchant dans un alésage divergent ménagé à l'intérieur d'un manchon fileté prolongeant ledit écrou et destiné à traverser ladite paroi,
- une bague en position de bille ajustée pour tourner librement dans toutes les directions à l'intérieur de ladite cavité de l'écrou au contact de sa paroi sphérique et destinée à être fixée de manière amovible au tube de guidage et
- un contre-écrou destiné à se visser sur ledit manchon du côté de la paroi opposée à l'écrou.

Selon une mode de réalisation avantageuse, le tube de guidage est constitué de deux tronçons dont les extrémités respectives sont destinées à être assemblées coaxialement l'une avec l'autre à l'intérieur de la bague.

Selon un autre mode de réalisation, les deux tronçons sont destinés à être vissés l'un dans l'autre en enserrant ladite bague.

Selon un autre mode de réalisation, ladite bague est taraudée et les deux tronçons sont filetés et destinés à être vissés dans ladite bague.

Selon une autre mode de réalisation, ladite bague comporte un embrèvement formant butée pour une bride portée par le tube de guidage.

Ladite cavité de l'écrou peut comporter deux encoches latérales diamétralement opposées, dont la longueur angulaire est légèrement supérieure à la largeur de la bague de façon à permettre son extraction dans un plan perpendiculaire à celui de l'écrou.

De préférence, le tube de guidage est pourvu, sur sa paroi latérale, d'au moins deux méplats diamétralement opposés permettant sa prise en vue de la fixation à la bague.

Selon une autre mode, ledit écrou comporte un rétreint annulaire délimitant une face de calage venant en butée contre ladite paroi.

Selon une variante spécifique, les bords latéraux externes respectifs de la cavité de l'écrou et de l'alésage du manchon sont biseautés pour augmenter l'angle limite du débattement du tube de guidage.

En présence d'un seul orifice de traversée de paroi, l'articulation de l'invention permet de monter une commande à billes sans restriction du débattement de la lame et de remplacer le cas échéant, une commande à câble traditionnel sans affaiblir la paroi.

L'invention sera mieux comprise à la lecture de la description qui va suivre en référence aux dessins sur lesquels :
- La figure 1 représente une vue en coupe d'un mode de réalisation de l'articulation de l'invention avec la lame en position axiale.
- La figure 2 représente une vue en coupe de l'articulation de la figure 1 avec la lame en position inclinée.

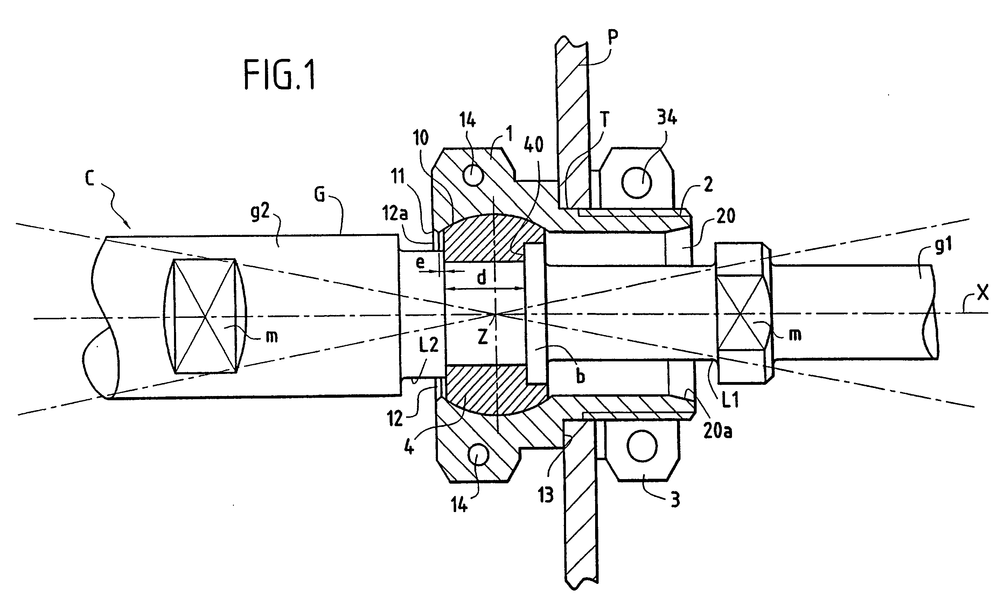

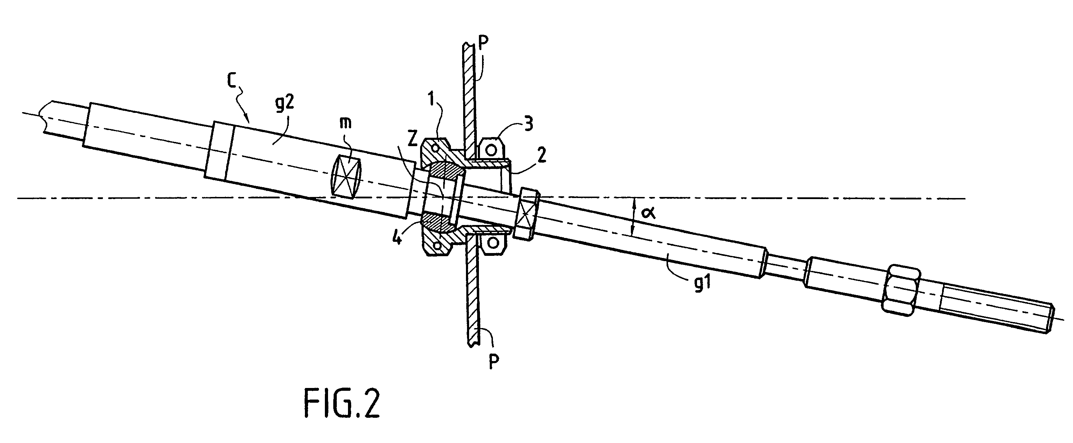

L'articulation représentée sur les figures 1 et 2 est destinée à équiper une commande à billes C pour permettre son passage, via un orifice T au travers d'une paroi P.

Sur la figure 1, la commande à billes C n'est représentée que partiellement sous la forme du court tronçon traversant la paroi, qui est intercalé entre les embouts de gaine et aligné sur l'axe X. La lame centrale qui est mobile longitudinalement n'est pas apparente puisqu'elle est enfermée à l'intérieur du tube de guidage G.

L'articulation de l'invention comprend un écrou 1 prolongé par un manchon fileté 2 destiné à traverser la paroi P en étant logé dans l'orifice T.

Un contre-écrou 3 vient se visser sur le manchon 2 du côté de la paroi P opposé à l'écrou 1 pour assurer la fixation de l'articulation. L'écrou 1 comporte, à cet effet, un rétreint annulaire 13 délimitant une face de calage venant en butée contre la paroi P.

L'écrou 1 est pourvu intérieurement d'une cavité axiale 10 à parois sphériques.

La cavité 10 débouche dans un alésage divergent 20 ménagé à l'intérieur du manchon 2.

La cavité 10 reçoit une bague 4 en portion de bille dont les dimensions sont ajustées pour permettre une libre rotation de ladite bague dans toutes les directions, au contact de la paroi sphérique, à la manière d'un roulement.

La bague 4 est, par ailleurs, fixée de manière amovible au tube de guidage G.

Dans la variante représentée sur les figures, le tube de guidage G est constitué de deux tronçons g1, g2 dont les extrémités respectives sont destinées à être assemblées coaxialement l'une avec l'autre à l'intérieur de l'orifice central de la bague 4 de l'un des tronçons, par exemple le tronçon g2.

A cet effet, une portion d'extrémité est pourvue d'un taraudage dans lequel vient se visser une portion d'extrémité filetée du tronçon g1, en enserrant la bague 4 de façon intercalaire.

Les portions d'extrémité taraudée et filetée ont ici une longueur d inférieure à la largeur de la bague 4 du fait que la bague 4 comporte un embrèvement 40 formant butée pour une bride b portée par la portion filetée du tronçon g1 du tube de guidage G.

Le tronçon g2 porte, quant à lui, un épaulement e venant en appui contre l'épaisseur de la bague 4 en fin de vissage du tronçon g1.

La bague 4 est ainsi immobilisée entre la bride b et l'épaulement e.

Selon un autre mode de réalisation non représenté, la bague 4 est taraudée et les deux tronçons g1, g2 sont filetés pour venir se visser dans ladite bague.

La cavité 10 de l'écrou 1 comporte deux encoches latérales 11, 12 diamétralement opposées dont la longueur angulaire est légèrement supérieure à la largeur de la bague 4 de façon à permettre son extraction dans un plan perpendiculaire au plan de l'écrou 1.

Le tube de guidage G est pourvu, sur sa paroi latérale, d'au moins deux et ici de quatre méplats m diamétralement opposés deux à deux.

Les méplats m permettent la prise des tronçons g1, g2 de tube par un outil de serrage en vue de leur assemblage et de leur fixation à la bague 4.

Dans le mode de réalisation représenté, l'écrou 1 et le contre-écrou 3 comportent des conduits transversaux 14, 34 pour l'installation de liens anti-rotation (non représentés).

Le débattement du tube de guidage G peut s'effectuer dans toutes les directions jusqu'à un angle limite α de pivotement représenté sur la figure 2 et qui a ici une valeur d'environ 45°.

L'axe du pivotement passe par le centre Z de la bague 4 qui est situé ici du côté arrière de la paroi P.

Les collets L1, L2 à profil incurvé qui sont ménagés sur les tronçons g1, g2 du tube de guidage G viennent en butée contre, respectivement le bord latéral externe 10a de la cavité 10 et le bord externe divergent 20a de l'alésage 20 qui sont tous deux biseautés et permettent ainsi d'augmenter la valeur extrême de l'angle limite α.

## Revendications

1. Articulation pour une traversée de paroi (P) par un câble de commande à billes (C) comprenant notamment une lame mobile longitudinalement dans un tube de guidage (G), **caractérisée en ce qu'**elle comprend :
- un écrou (1) pourvu d'une cavité axiale (10) à parois sphériques débouchant dans un alésage (20) divergent ménagé à l'intérieur d'un manchon fileté (2) prolongeant ledit écrou (1) et destiné à traverser ladite paroi (P),
- une bague (4) en portion de bille ajustée pour tourner librement dans toutes les directions à l'intérieur de ladite cavité de l'écrou (1) au contact de sa paroi sphérique (10) et destinée à être fixée de manière amovible au tube de guidage (G) qui est constitué de deux tronçons (g1, g2) dont les extrémités respectives sont susceptibles d'être assemblées coaxialement l'une avec l'autre à l'intérieur de la bague (4), et
- un contre-écrou (3) destiné à se visser sur ledit manchon (2) du côté de la paroi (P) opposé à l'écrou (1).

2. Articulation selon la revendication 1, **caractérisée en ce que** les deux tronçons (g1, g2) sont destinés à être vissés l'un dans l'autre en enserrant ladite bague (4).

3. Articulation selon la revendication 1, **caractérisée en ce que** ladite bague (4) est taraudée et les deux tronçons (g1, g2) sont filetés et destinés à être vissés dans ladite bague (4).

4. Articulation selon l'une des revendications précédentes, **caractérisée en ce que** ladite bague (4) comporte un embrèvement (40) formant butée pour une bride (b) portée par le tube de guidage (G).

5. Articulation selon l'une des revendications précédentes, **caractérisée en ce que** ladite cavité (10) de l'écrou (1) comporte deux encoches latérales (11, 12) diamétralement opposées, dont la longueur angulaire est légèrement supérieure à la largeur de la bague (4) de façon à permettre son extraction dans un plan perpendiculaire à celui de l'écrou (1).

6. Articulation selon l'une des revendications précédentes, **caractérisée en ce que** le tube de guidage (G) est pourvu, sur sa paroi latérale, d'au moins deux méplats (m) diamétralement opposés permettant sa prise en vue de la fixation à la bague (4).

7. Articulation selon l'une des revendications précédentes, **caractérisée en ce que** ledit écrou (1) comporte un rétreint annulaire (13) délimitant une face de calage venant en butée contre ladite paroi (P).

8. Articulation selon l'une des revendications précédentes, **caractérisée en ce que** les bords latéraux externes (10a, 20a) respectifs de la cavité de l'écrou (1) et de l'alésage (20) du manchon (2) sont biseautés pour augmenter l'angle limite (α) du débattement du tube de guidage (G).

## Patentansprüche

1. Gelenk für eine Durchführung eines kugelgeführten Steuerkabels (C) durch eine Wand (P), insbesondere umfassend eine längs in einen Führungsrohr (G) bewegliche Lamelle, **dadurch gekennzeichnet, daß** es umfaßt:
- eine Mutter (1), die mit einem axialen Hohlraum (10) mit sphärischen Wänden versehen ist, der in eine divergierende Bohrung (20) mündet, die im Inneren einer Gewindehülse (2) vorgesehen ist, die die Mutter (1) verlängert und dazu bestimmt ist, durch die Wand (P) hindurchzuführen,
- einen Ring (4) im Kugelführungsabschnitt, der derart ausgeführt ist, daß er sich frei in alle Richtungen im Inneren des Hohlraums der Mutter (1) in Kontakt mit ihrer sphärischen Wand (10) dreht, und der dazu bestimmt ist, abnehmbar auf dem Führungsrohr (G) befestigt zu werden, das aus zwei Abschnitten (g1, g2) besteht, deren jeweilige Enden koaxial miteinander im Inneren des Ringes (4) zusammengebaut werden können, und
- eine Gegenmutter (3), die dazu bestimmt ist, auf der der Mutter (1) gegenüberliegenden Seite der Wand (P) auf die Hülse (2) geschraubt zu werden.

2. Gelenk nach Anspruch 1, **dadurch gekennzeichnet, daß** die beiden Abschnitte (g1, g2) dazu bestimmt sind, durch Festziehen des Ringes (4) ineinandergeschraubt zu werden.

3. Gelenk nach Anspruch 1, **dadurch gekennzeichnet, daß** der Ring (4) ein Gewinde aufweist und die beiden Abschnitte (g1, g2) mit Gewinde dazu bestimmt sind, in den Ring (4) geschraubt zu werden.

4. Gelenk nach einem der vorhergehenden Ansprüche, **dadurch gekennzeichnet, daß** der Ring (4) einen Einstich (40) umfaßt, der einen Anschlag für einen vom Führungsrohr (G) getragenen Flansch (b) bildet.

5. Gelenk nach einem der vorhergehenden Ansprüche, **dadurch gekennzeichnet, daß** der Hohlraum (10) der Mutter (1) zwei diametral gegenüberliegende seitliche Kerben (11, 12) umfasst, deren Winkellänge etwas größer als die Breite des Rings (4) ist, um sein Herausziehen in einer Ebene senkrecht auf jener der Mutter (1) zu ermöglichen.

6. Gelenk nach einem der vorhergehenden Ansprüche, **dadurch gekennzeichnet, daß** das Führungsrohr (G) auf seiner Seitenwand mit mindestens zwei diametral gegenüber liegenden Schlüsselflächen versehen ist, die sein Greifen zum Befestigen am Ring (4) ermöglichen.

7. Gelenk nach einem der vorhergehenden Ansprüche, **dadurch gekennzeichnet, daß** die Mutter (1) eine ringförmige Einschnürung (13) umfasst, die eine Positionierungsfläche begrenzt, die an der Wand (P) zur Anlage gelangt.

8. Gelenk nach einem der vorhergehenden Ansprüche, **dadurch gekennzeichnet, daß** die jeweiligen äußeren Seitenränder (10a, 20a) des Hohlraums der Mutter (1) und der Bohrung (20) der Hülse (2) angefast sind, um den Grenzwinkel (α) für das Schwenken des Führungsrohrs (G) zu begrenzen.

## Claims

1. Joint for passage through a wall (P) by a ball-bearing control cable (C) comprising in particular an element longitudinally mobile in a guiding tube (G), **characterised in that** it comprises:
- a nut (1) provided with an axial cavity (10) presenting spherical walls opening out in a divergent bore (20) made inside a threaded sleeve (2) extending said nut (1) and intended to pass through said wall (P),
- a ring (4) in the form of a portion of ball adapted to rotate freely in all directions within said cavity of the nut (1) in contact with its spherical wall (10) and intended to be removably fixed to the guiding tube (G) which is constituted by two sections (g1, g2) of which the respective ends are adapted to be assembled coaxially with each other inside the ring (4), and
- a lock-nut (3) intended to be screwed on said sleeve (2) on that side of the wall (P) opposite the nut (1).

2. The joint according to claim 1, **characterised in that** the two sections (g1, g2) are intended to be screwed in each other, while tightening said ring (4).

3. The joint according to claim 1, **characterised in that** said ring (4) is tapped and the two sections (g1, g2) are threaded and intended to be screwed in said ring (4).

4. The joint according to one of the preceding claims, **characterised in that** said ring (4) comprises a throat (40) forming stop for a flange (b) borne by the guiding tube (G).

5. The joint according to one of the preceding claims, **characterised in that** said cavity (10) of the nut (1) comprises two diametrally opposite lateral notches (11, 12), of which,the angular length is slightly greater than the width of the ring (4) so as to allow extraction thereof in a plane perpendicular to that of the nut (1).

6. The joint according to one of the preceding claims, **characterised in that** the guiding tube (G) is provided, on its lateral wail, with at least two diametrally opposite flat parts (m) allowing it to be gripped with a view to being fixed to the ring (4).

7. The joint according to one of the preceding claims, **characterised in that** said nut (1) comprises an annular shoulder (13) defining a face for blocking coming into abutment against said wall (P).

8. The joint according to one of the preceding claims, **characterised in that** the respective outer lateral edges (10a, 20a) of the cavity of the nut (1) and of the bore (20) of the sleeve (2) are bevelled in order to increase the limiting angle (α) of clearance of the guiding tube (G).
